Europäisches Patentamt

European Patent Office

Office européen des brevets

(19)

(11) Veröffentlichungsnummer: **0 289 781**
**B1**

# (12) EUROPÄISCHE PATENTSCHRIFT

(45) Veröffentlichungstag der Patentschrift:
09.05.90

(21) Anmeldenummer: 88105072.8

(22) Anmeldetag: 29.03.88

(51) Int. Cl.⁵: **B29C 53/76, B29C 67/14,**
**B29B 15/12**

(54) Verfahren zur Herstellung von faserverstärkten Kunststoff-Formteilen.

(30) Priorität: 30.04.87 CH 1650/87

(43) Veröffentlichungstag der Anmeldung:
09.11.88 Patentblatt 88/45

(45) Bekanntmachung des Hinweises auf die Patenterteilung:
09.05.90 Patentblatt 90/19

(84) Benannte Vertragsstaaten:
AT BE CH DE ES FR GB GR IT LI LU NL SE

(56) Entgegenhaltungen:
EP-A- 0 000 755
DE-A- 1 629 840
DE-A- 2 012 111
FR-A- 2 177 518
GB-A- 1 069 954
GB-A- 2 105 297
GB-A- 2 147 561
US-A- 2 744 043
US-A- 2 878 038
US-A- 3 975 479

GUMMI, ASBEST, KUNSTSTOFFE, Band 35, Nr. 11, November 1982, Seiten 630-635, Stuttgart, DE; E. v. GELLHORN et al.: "Wickeln - Verfahrensoptimierung durch Vakuumtränkung"
PATENT ABSTRACTS OF JAPAN, Band 4,

(73) Patentinhaber: GEORG FISCHER AKTIENGESELLSCHAFT, Mühlentalstrasse 105, CH-8201 Schaffhausen(CH)

(72) Erfinder: Overath, Friedhelm, Kohlfirststrasse 13, CH-8203 Schaffhausen(CH)
Erfinder: Weyer, Michael, Baumschulstrasse 2, CH-8200 Schaffhausen(CH)

(56) Entgegenhaltungen: (Fortsetzung)
Nr. 68 (M-12)[550], 21. Mai 1980, Seite 77 M 12; & JP-A-55 32 625 (TOKYO SHIBAURA DENKI K.K.) 07-03-1980
MODERN PLASTICS INTERNATIONAL, Band 16, Nr. 11, November 1986, Seiten 9,12, Lausanne, CH; "Prepreg UV-curing roving leads to dry winding"

## Beschreibung

Die Erfindung betrifft ein Verfahren zur Herstellung eines faserverstärkten Kunststoff-Formteils für Rohrleitungssysteme, wie es im Oberbegriff von Anspruch 1 gekennzeichnet ist.

Für die Weiterleitung von Medien, insbesondere von aggressiven Medien in der chemischen Industrie, werden Rohrleitungen aus einem thermoplastischen Material wie z.B. aus Polyäthylen, Polypropylen, Polyvinylchlorid usw. und einem äusseren Mantel aus einem faserverstärkten Laminat wie z.B. gewickelte Glasfasern mit einem ungesättigten Polyesterharz oder Epoxyd-Harz getränkt, verwendet. Der äussere Laminat-Mantel dient zur Verstärkung der Rohre, um Medien mit höheren Drücken weiterleiten zu können, als auch zur Aufnahme von äusseren Kräften, wie z.B. von Zug-Druck oder Biegekräften auf die Rohrleitung.

Für derartige Rohrleitungssysteme sind entsprechende Formteile erforderlich, welche z.B. als T-Stück, Kreuz-Stück, Winkel, Bogen oder Reduziermuffen ausgebildet sind, wie diese auch im übrigen Rohrleitungsbau erforderlich sind.

Bei einem bekannten Herstellverfahren für derartige Formteile erfolgt die Bewicklung im sogenannten Nassverfahren, d.h. die Glasfasern bzw. die Glasfaser-Bänder werden beim Wickelvorgang mit Harz getränkt. Beim maschinellen Wickeln nach dem Drehbankprinzip können jedoch nur einfach geformte rohrförmige oder bogenförmige Formteile nass gewickelt werden. Für komplizierte Formteile wie T- oder Kreuzstücke ist ein derartiges maschinelles Wickelverfahren nicht möglich, da das Band mit dem Tränkbehälter während des Wickelns um seine Längsachse gedreht werden müsste.

Ausserdem können bei hohen Wickelgeschwindigkeiten die Glasfaser-Gewebebänder nicht mehr genügend mit Harz durchtränkt werden.

Bekannt ist auch ein Verfahren der eingangs genannten Art (Literatur "Gummi, Asbest, Kunststoffe", Band 35, Nr. 11, November 1986, Seiten 630–635, "Wickeln – Verfahrensoptimierung durch Vakuumtränkung"). Hierbei können durch Verwendung eines trockenen Glasfaser-Gewebebandes auch komplizierte T-Stücke bzw. Kreuzstücke auf einer 4-Achsen-NC-gesteuerten Wickelmaschine nach Programm gewickelt werden, da hierfür das Band um die Längsachse gedreht werden muss. Die mit der Wicklung versehenen Formkörper werden dann in ein Harzbad eingetaucht, deren Tränkbehälter vorher evakuiert wurde. Durch anschliessendes Aufbringen von Atmosphärendruck, wobei ein ein- oder mehrmaliger Wechsel des Druckes erfolgen kann, wird eine Durchtränkung der Wicklung mit Harz erreicht.

Damit die Innenkontur der Form-Spritzlinge nicht mit dem Harz benetzt wird, müssen vorher die offenen Enden der Formteile verschlossen werden.

Nachteilig hierbei ist, dass im Innern der Formteile dabei der Atmosphärendruck herrscht, wenn beim umgebenden Harzbad ein Unterdruck besteht. Dies kann zu Deformierungen der Formteile führen, so dass unter Umständen derartige Formteile nicht verwendbar sind.

Sind die Verschlussstellen an den Formteilen nicht einwandfrei dicht, können dort Luftblasen in die getränkte Wicklung eintreten, wodurch eine Verschlechterung der Laminatqualität in diesem Bereich entsteht.

Aufgabe der vorliegenden Erfindung ist es, das eingangs genannte Verfahren derart zu verbessern, dass eine einwandfreie, blasenfreie Durchtränkung der Wicklung erreicht wird, ohne dass eine Verformung der Formteile entsteht. Das Verfahren und die dafür erforderliche Anlage soll bei allen im Rohrleitungsbau verwendeten Formteilen anwendbar sein und für hohe Stückzahlen eine industrielle und automatisierbare Fertigung bei niedrigen Kosten ermöglichen.

Diese Aufgabe wird durch die kennzeichnenden Merkmale von Anspruch 1 und 6 gelöst.

Besonders vorteilhafte Ausgestaltungen der Erfindung sind in den abhängigen Ansprüchen gekennzeichnet.

Durch die Verbindung des Innenraumes der Formteile mittels eines Entlüftungsschlauches mit dem jeweiligen auf das Harzbad wirkenden Druck wird ein Überdruck im Innenraum des Formteiles bei Vakuum bzw. Unterdruck im Harzbad vermieden, so dass keine Verformungen oder eine Blasenbildung durch entweichende Luft in der harzgetränkten Wicklung entstehen kann. Durch die Verwendung eines durch UV-Strahlen aushärtenden Harzes kann das Harz auch für längere Zeit in dem Behälter bleiben, ohne dass es unbrauchbar wird, wodurch eine industrielle Fertigung gewährleistet ist.

Die besten verwendeten kalthärtenden Harze sind für eine wirtschaftliche Fertigung nicht geeignet.

Warmhärtende Harze können ebenfalls nicht immer verwendet werden, da für die Aushärtung derartig hohe Temperaturen erforderlich sind, die bei einigen Formteil-Materialien wie z.B. Polypropylen nicht zulässig sind.

Für die UV-Aushärtung sind kurzfristig nur solch hohe Temperaturen erforderlich, die für die verwendeten Materialien nicht schädlich sind.

Durch die Rotation während der UV-Aushärtung wird das Herausfliessen des Harzes vermieden, so dass auch Harze mit einer geringen Viskosität für ein schnelles Eindringen in die Wicklung verwendet werden können. Der gesamte Verfahrensablauf gemäss den erfindungsgemässen Merkmalen ist mit einfachen Mitteln automatisierbar. Die Erfindung ist in beiliegenden Zeichnungen beispielsweise dargestellt und nachfolgend beschrieben.

Es zeigen:

Fig. 1a bis 1d Das Herstellungsverfahren von glasfaserverstärkten Formteilen in einer vereinfachten Darstellung.

Fig. 2 Ein auf einem Wickeldorn angeordnetes Spritzguss-Formteil im Querschnitt und

Fig. 3 ein Teilquerschnitt von Fig. 2 mit einer aufgesteckten Abdeckbüchse.

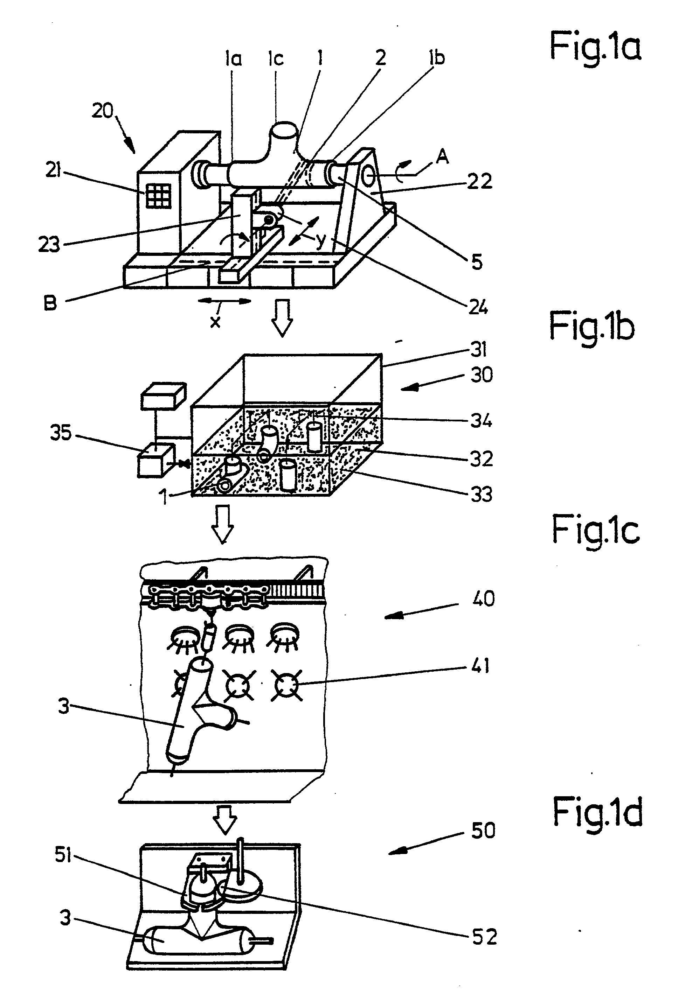

Aus der Fig. 1a ist der Wickelvorgang auf einer Wickelmaschine 20 vereinfacht dargestellt, wobei ein den inneren Mantel bildendes Spritzguss-Formteil 1 aus einem thermoplastischen Material mit einem Glasfaser-Gewebeband 2 bewickelt wird. Im dargestellten Ausführungsbeispiel ist das Formteil 1 als T-Stück mit drei rohrförmigen Enden 1a, 1b, 1c ausgebildet, wobei zentrisch zu den Enden 1a, 1b ein Wickeldorn 5 angeordnet ist, welcher zur Aufnahme des Formteils 1 in der Wickelmaschine 20 dient. Vor dem Bewickeln wird das Formteil 1 durch ein haftvermittelndes Verfahren an der Oberfläche behandelt, wodurch diese für eine bessere Verbindung mit dem glasfaserverstärkten äusseren Mantel erreicht wird.

Der mit dem so vorbereiteten Formteil 1 versehene Wickeldorn 5 wird zwischen einem Spindelstock 21 und einem Reitstock 22 der Wickelmaschine 20 eingespannt und ist um eine Achse A rotierbar.

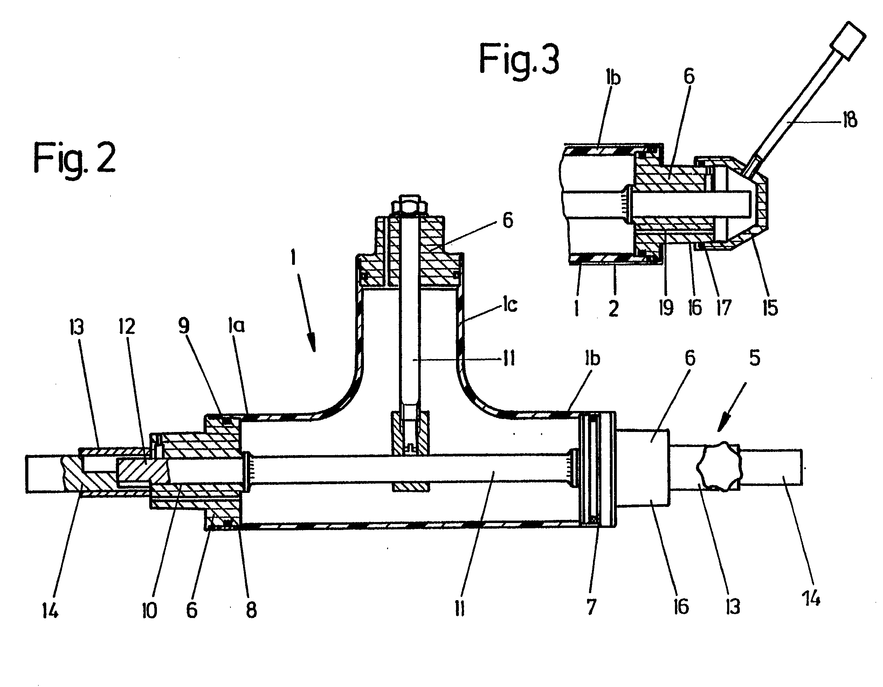

Auf einem in X- und Y-Richtung verschiebbaren Schlitten 23 ist eine Bandführungsvorrichtung 24 angeordnet, welche um eine Achse B drehbar ist. Die Antriebe für die Verschiebung in X- und Y-Richtung als auch die Drehantriebe für die A- und B-Achse sind NC-gesteuert, so dass der Wickelvorgang automatisch nach einem durch einen Rechner optimierten Programm erfolgt. Die flächendeckende ein- oder mehrschichtige Bewicklung ist auch optimal bei dem T-Stück gewährleistet, da bei der Bewicklung des rohrförmigen Endes 1c das Glasfaser-Gewebeband 2 um die Achse B gedreht wird. Nach dem Bewickeln werden die rohrförmigen Enden 1a, 1b, 1c dicht verschlossen (s. Fig. 3) und das bewickelte Formteil 1 entsprechend Fig. 1b in einem Vakuumtränkbad 30 mit einem Harz getränkt.

Das Vakuumbad weist einen luftdicht verschliessbaren Behälter 31 auf, in welchem eine Wanne 32 mit einem UV-härtenden Harz 33 und eine absenkbare Aufhängevorrichtung 34 für die Formteile angeordnet ist.

Nach dem Einhängen der bewickelten Formteile 1 und Schliessen des Behälters wird durch eine Vakuumpumpe 35 im Behälter ein Unterdruck erzeugt. Unter Aufrechterhaltung des Unterdrucks werden die Formteile in das Harz eingetaucht und anschliessend das Harzbad mit atmosphärischem Druck beaufschlagt, wodurch das Harz in das Glasfaser-Gewebe eingedrückt wird. Im Behälter 31 wird dann bei im Harz hängenden Formteilen nochmals abwechselnd Unterdruck und atmosphärischer Druck erzeugt, so dass ein gutes Druchtränken des Glasfasergewebes mit Harz gewährleistet ist.

Die mit Harz getränkten Formteile werden zur Vermeidung von örtlichen Harzansammlungen möglichst unter Rotation in eine Bestrahlungskammper 40 gebracht (s.Fig. 1c) wo sie einer allseitigen UV-Bestrahlung mittels Lampen 41 ausgesetzt sind. Hierbei härtet das Harz gleichmässig aus. Die Fig. 1d zeigt eine Bearbeitungsstation 50, welche eine Spannvorrichtung 51 sowie ein Trennwerkzeug 52 wie z.B. eine Trennschleifscheibe oder eine Kreissäge aufweist. Mit dem Trennwerkzeug 52 werden die über das thermoplastische Formteil 1 hinausragenden Enden der ausgehärteten Glasfaserwicklung abgetrennt und der Wickeldorn entfernt. Danach ist das fertige glasfaserverstärkte Formteil 3 zur weiteren Verwendung in einem Rohrleitungssystem bereit.

Fig. 2 zeigt die Aufnahme eines T-förmigen thermoplastischen Formteils 1 auf dem Wickeldorn 5. In die rohrförmigen Enden 1a, 1b, 1c des Formteils 1 werden Einsteckbüchsen 6 bis zu einer Anschlagfläche 7 eingesteckt, welche am Zentriersitz 8 eine Dichtung 9 aufweisen. In zentrischen Bohrungen 10 der drei Einsteckbüchsen 6 ist ein T-förmiger Innendorn 11 gelagert, welcher mit Aufsteckenden 12 über die beiden Einsteckbüchsen 6 an den rohrförmigen Enden 1a, 1b hinausragt. Mittels Steckbüchsen 13 anklemmbare Dornteile 14 bilden dann zusammen mit dem Innendorn 11 den Wickeldorn 5. Nach dem Wickeln des Glasfaser-Gewebebandes 2 auf das Formteil 1 werden die Steckbüchsen 13 und die Dornteile 14 abgenommen, damit Abdeckkappen 15 auf die leicht konischen Partien 16 der Einsteckbüchsen 6 aufgesteckt werden können, wie aus Fig. 3 ersichtlich. Durch eine Dichtung 17 im Aufstecksitz der Abdeckkappe 15 können die Enden 1a, 1b, 1c, luftdicht abgeschlossen werden. Eine der Abdeckkappen 15, welche z.B. beim Rohrende 1b auf die Einsteckbüchse 6 aufgesteckt wird, weist einen Schlauch 18 auf, durch welchen das Innere des Formteils 1 über eine Bohrung 19 der Einsteckbüchse 6 mit dem äusseren Umgebungsdruck verbunden ist. Der Schlauch 18 ermöglicht somit, dass auch das im Harzbad eingetauchte Formteil im Inneren jeweils mit Unterdruck oder normalem atmosphärischen Druck beaufschlagbar ist, ohne dass Harz in das Innere des Formteils gelangt. Die gleichen Einstellbüchsen 6 und Abdeckkappen 15 können auch bei Winkeln und Bögen verwendet werden, wobei lediglich der Innendorn und die aufsteckbaren Dornteile zur Bildung eines eine Drehachse aufweisenden Wickeldorns entsprechend anders ausgebildet sind.

## Patentansprüche

1. Verfahren zur Herstellung eines faserverstärkten Kunststoff-Formteiles (3) für Rohrleitungssysteme, welches einen inneren Mantel aus einem thermoplastischen Material und einen äusseren Mantel aus einer mit Kunstharz getränkten Faserwicklung aufweist, wobei ein trockenes Glasfasergewebe-Band (2) auf einer NC-gesteuerten Wickelmaschine (20) nach einem vorgegebenen Programm auf ein, den inneren Mantel bildenden Spritzguss-Formteil aus thermoplastischem Material mindestens flächendeckend aufgewickelt, das umwickelte Formteil bei Aufrechterhaltung eines Unterdruckes in ein Harzbad (30) eingetaucht und anschliessend auf das Harzbad (30) Atmosphärendruck aufgebracht wird, dadurch gekennzeichnet, dass vor dem Bewickeln die rohrförmigen Enden (1a, 1b, 1c) des Spritzgussformteiles (1) mit je einer Einsteckbüchse (6) versehen werden, welche zur Halterung eines Aufnahmedorns (14) ausgebildet sind, dass nach dem Bewickeln die Einsteckbüchsen (6) mit einer Abdeckkappe (15) dicht verschlossen werden, wobei mindestens eine der Abdeckkappen (15) mit einem Entlüftungsschlauch (18) versehen ist, wodurch der Innenraum des Formteiles (1) mit dem jeweiligen auf das Harzbad (30) wirkenden Umgebungsdruck verbunden ist, dass das Harzbad (30) ein UV-härtendes Harz (33) enthält und dass nach Entnahme des getränkten Formteiles (1) das Harz (33) durch UV-Licht bei gleichzeitiger Rotation des Formteiles (1) ausgehärtet wird.

2. Verfahren nach Anspruch 1, dadurch gekennzeichnet, dass nach dem Eintauchen des Formteiles (1) in das Harzbad (30) auf dieses von aussen und von innen mehrmals abwechslungsweise ein Unterdruck und ein Atmosphärendruck einwirkt.

3. Verfahren nach Anspruch 1 oder 2, dadurch gekennzeichnet, dass das Spritzguss-Formteil (1) vor dem Bewickeln mit dem Glasfasergewebe-Band (2) durch ein haftvermittelndes Verfahren an der Oberfläche behandelt wird.

4. Verfahren nach einem der Ansprüche 1 bis 3, dadurch gekennzeichnet, dass insbesondere bei T-förmigen Formteilen während des Wickelns das Glasfasergewebe-Band (2) nochmals um seine Längsachse gedreht wird.

5. Verfahren nach einem der Ansprüche 1 bis 4, dadurch gekennzeichnet, dass die über das thermoplastische Formteil hinausragenden Enden der ausgehärteten Glasfaserwicklung durch eine mechanische Bearbeitung abgetrennt werden.

6. Anlage zur Durchführung des Verfahrens nach einem der Ansprüche 1 bis 5, bestehend aus einer NC-gesteuerten Wickelmaschine (20) mit Wickeldorn (5) und einem nachfolgend angeordneten Vakuumtränkbad (30), gekennzeichnet durch eine Wickelmaschine (20) mit einer 4-achsigen NC-Steuerung, in welcher das Spritzguss-Formteil (1) auf den Wickeldorn (5) angeordnet mit einem Glasfaser-Gewebeband (2) bewickelbar ist, einer dem Vakuumtränkbad (30) nachfolgend angeordneten Bestrahlungskammer (40) mit UV-Lampen (41) und einer Bearbeitungsstation (50).

7. Anlage nach Anspruch 6, dadurch gekennzeichnet, dass der Wickeldorn (5) einen Innendorn (11) aufweist, welcher in Bohrungen von in den rohrförmigen Enden (1a, 1b, 1c) des Formteiles (1) angeordneten Einsteckbüchsen (6) gehalten ist.

8. Anlage nach Anspruch 7, dadurch gekennzeichnet, dass die rohrförmigen Enden (1a, 1b, 1c) mittels auf die Einsteckbüchsen (6) absteckbare Abdeckklappen (15) abdichtbar sind.

9. Anlage nach Anspruch 8, dadurch gekennzeichnet, dass an einer der Abdeckklappen (15) ein Schlauch (18) angeordnet ist, mittels welchem der Innenraum des ins Harzbad eingetauchten Formteiles (1) mit dem auf das Harzbad wirkenden Unter- oder atmosphärischem Druck beaufschlagbar ist.

**Revendications**

1. Procédé de fabrication d'une pièce de forme spécifique (3) en matière plastique renforcée par des fibres, pour des systèmes ou ensembles de tuyauteries, qui présente une enveloppe intérieure composée d'un matériau thermoplastique et une enveloppe extérieure composée d'un enroulement de fibres imprégné de résine, une bande de tissu de fibre de verre (2) étant enroulée, en recouvrant au moins la surface, sur une machine d'enroulement (20) à commande numérique, fonctionnant selon un programme prédéterminé, sur une pièce de forme moulée par injection, constituant l'enveloppe intérieure et composée d'un matériau thermoplastique, la pièce de forme enveloppée étant immergée en maintenant une dépression dans un bain de résine (30) et la pression atmosphérique étant ensuite appliquée sur le bain de résine (30), procédé caractérisé en ce qu'avant enveloppement, les extrémités tubulaires (1a, 1b, 1c) de la pièce de forme moulée par injection (1) sont chacune pourvue d'un manchon d'insertion (6) réalisé en vue de maintenir un mandrin de réception (14), en ce qu'après enveloppement, les manchons d'insertion ou d'enfichage (6) sont obturés pour être étanche à l'aide d'un capuchon d'obturation (15), au moins l'un des capuchons d'obturation (15) étant pourvu d'un tuyau d'aération (18), ce qui fait que l'espace intérieur de la pièce de forme (1) est relié à la pression ambiante agissant sur le bain de résine (30), procédé caractérisé de plus en ce que le bain de résine (30) contient une résine durcissant aux UV (33), et en ce qu'après enlèvement de la pièce de forme imprégnée (1), la résine (33) est durcie par la lumière UV avec une rotation simultanée de la pièce de forme (1).

2. Procédé selon la revendication 1, caractérisé en ce qu'après immersion de la pièce de forme (1) dans le bain de résine (30), on fait agir sur cette dernière de manière alternée et répétitive, de l'intérieur et de l'extérieur, une dépression et une pression égale à la pression atmosphérique.

3. Procédé selon la revendication 1 ou 2, caractérisé en ce qu'avant enroulement à l'aide de la bande de tissu de fibre de verre (2), la pièce de forme moulée par injection (1) est traitée au moyen d'une procédé procurant une adhérence de surface.

4. Procédé selon l'une des revendications 1 à 3, caractérisé en ce qu'en particulier pour les pièces de forme spécifique en T, la bande de tissu de fibre de verre (2) est encore tournée autour de son axe longitudinal pendant l'enroulement.

5. Procédé selon l'une des revendications 1 à 4, caractérisé en ce que les extrémités dépassant au-dessus de la pièce de forme thermoplastique sont séparées de l'enroulement durci de fibre de verre par usinage mécanique.

6. Installation pour l'exécution du procédé selon l'une des revendications 1 à 5, se composant d'une machine à envelopper (20) à commande numérique, comportant un mandrin d'enroulement (5) et un bain d'imprégnation (30) sous vide disposé à la suite, caractérisé par une machine à envelopper (20) à commande numérique et à quatre axes, dans laquelle la pièce de forme moulée par injection (1) est disposée sur le mandrin d'enroulement (59) en étant susceptible d'être enveloppée par une bande de tissu de fibre de verre (2), machine comportant une chambre d'irradiation (40) à lampes UV (41) disposée à la suite du bain d'imprégnation (30) et un poste d'usinage (50).

7. Installation selon la revendication 6, caractérisé en ce que le mandrin d'enroulement (5) présente un mandrin intérieur (11) maintenu par des manchons d'enfichage ou d'insertion (6) disposés dans des alésages d'extrémités tubulaires (1a, 1b, 1c) de la pièce de forme (1).

8. Installation selon la revendication 7, caractérisé en ce que les extrémités tubulaires (1a, 1b, 1c) sont obturables de manière étanche par des capuchons d'obturation (15) enfichables sur les manchons d'enfichage (6).

9. Installation selon la revendication 8, caractérisé en ce que sur l'un des capuchons d'obturation (15), il est disposé un tuyau (18) au moyen duquel l'espace intérieur de la pièce de forme spécifique (1) immergée dans le bain de résine est susceptible d'être soumis soit à la dépression soit à la pression atmosphérique agissant sur le bain de résine.

**Claims**

1. Process for manufacturing a fibre-reinforced plastic moulded part (3) for pipeline systems, which has an internal jacket made from a thermoplastic material and an external jacket made from a fibre winding impregnated with a synthetic resin, where a dry glass fibre fabric tape (2) is wound on an injection moulded component made from a thermoplastic material on a NC controlled winding machine (20) following a predetermined programme to form the internal jacket which will at least cover the surface, with the wrapped moulded part immersed in a resin bath (30) while maintaining a pressure deficiency and subsequently the resin bath (30) being subjected to atmospheric pressure, characterised in that before proceeding with the winding process the tubular shaped ends (1a, 1b, 1c) of the injection moulded part (1) are each provided with an inserted fitting (6), which are designed to support a mandrel (14), that the inserted fittings (6) are tightly sealed with a sealing cap (15) after the winding process, at least one of the caps (15) is provided with a centilating hose (18), so that the inner chamber of the moulded part 1 is connected to the ambient pressure acting on the respective resin baths (30), that the resin bath (30) contains a UV hardening resin (33) is cured by UV light while rotating the moulded part (1) at the same time.

2. Process as in claim 1, characterised in that a pressure deficiency and an atmospheric pressure is applied alternately from the outside and from the inside several times on the resin bath (30) after dipping the moulded part (1) into it.

3. Process as in claim 1 or 2, characterised in that the injection moulded part (1) is surface treated by an adhesion enhancing process before being wrapped with the glass fibre tape (2).

4. Process as in claim 1 to 3 inclusive, characterised in that particularly in the case of T-shaped moulded parts the glass fibre fabric tape (2) is again rotated about its longitudinal axis during the winding operation.

5. Process as in one of the claims 1 to 4 inclusive, characterised in that the ends of the cured glass fibre winding projecting beyond the thermoplastic moulded part are cut off by a mechanical process.

6. Plant for executing the process as in one of the claims 1 to 5, inclusive, consisting of a NC controlled machine (20) with winding spindle (5) and a vacuum impregnating bath (30) installed downstream, characterised in that a winding machine (20) with a 4 axes NC control, in which the injection moulded part (1) fitted onto the winding spindle (59) can be wound with a glass fibre fabric tape (2), a radiation chamber (40) located downstream of the vacuum impregnating bath (30) with UV lamps (41) and a processing station (50).

7. Plant as in claim 6, characterised in that the winding spindle (5) has an internal spindle (11), which is held in holes of the inserted fittings (6) located in the tubular ends (1a, 1b, 1c) of the moulded part (1).

8. Plant as in claim 7, characterised in that the tubular shaped ends (1a, 1b, 1c) can be sealed onto the sealing caps (15) that can be fitted onto the inserted fittings (6).

9. Plant as in claim 8, characterised in that a hose (18) is fitted to one of the sealing caps (15), which can be used to subject the inner chamber of the moulded part (1) immersed in the resin bath to the pressure deficiency or atmospheric pressure acting on the resin bath.

Fig.1a

Fig.1b

Fig.1c

Fig.1d

Fig. 3

Fig. 2

EP 0 289 781 B1